# EUROPÄISCHE PATENTANMELDUNG

(11) **EP 1 316 796 A1**
(43) Veröffentlichungstag der Anmeldung: **04.06.2003**
(21) Anmeldenummer: 02450265.0
(22) Anmeldetag: 21.11.2002
(51) Int. Cl.: G01N 27/00, G01N 1/22

(54) **Vorrichtung und Verfahren zur Bestimmung des nichtflüchtigen Anteils von Aerosolpartikeln in einer Gasprobe**

(30) Priorität: 26.11.2001 AT 18492001
(71) Anmelder: AVL List GmbH, 8020 Graz (AT)
(72) Erfinder: Krempl, Peter W., Dr., 8047 Kainbach bei Graz (AT); Reiter, Christian, Dipl.-Ing., 8020 Graz (AT); Schindler, Wolfgang, Dr., 8043 Graz (AT); Singer, Wolfgang, Dipl.-Ing., 8103 Eisbach/Rein (AT)
(74) Vertreter: Babeluk, Michael, Dipl.-Ing. Mag.

(57) **Zusammenfassung**

Es betrifft ein Verfahren sowie eine Vorrichtung zur Bestimmung des nichtflüchtigen Anteils von Aerosolpartikeln in einer Gasprobe, insbesondere im Abgas von Verbrennungsmotoren, wobei die Aerosolpartikel auf einem Schwingsensor (2) zumindest einer Kristall-Mikrowaage (3) abgeschieden werden und die Veränderung zumindest eines Schwingungsparameters des Schwingsensors als Messgröße herangezogen wird. Erfindungsgemäß wird der Schwingsensor (2) zumindest einer Kristall-Mikrowaage (3) während der Abscheidung der Aerosolpartikel auf einer Temperatur über 200 °C, vorzugsweise zwischen 250 °C und 350 °C, gehalten.

## Beschreibung

Die Erfindung betrifft eine Vorrichtung und ein Verfahren zur Bestimmung des nichtflüchtigen Anteils von Aerosolpartikeln in einer Gasprobe, insbesondere im Abgas von Verbrennungsmotoren, wobei die Aerosolpartikel auf einem Schwingsensor zumindest einer Kristall-Mikrowaage abgeschieden werden und die Veränderung zumindest eines Schwingungsparameters des Schwingsensors als Messgröße herangezogen wird.

Wichtige Größen zur Beurteilung der Emissionen von Verbrennungsmotoren sind die Masse und die chemische Zusammensetzung der Partikel. Eine interessierende Fraktion stellt dabei der Anteil der graphitischen Partikel (Rußanteil) dar, da vermutet wird, dass eine Gesundheitsrelevanz gegeben ist. Die Bestimmung erfolgt üblicherweise durch die Rauchwert-Methode oder durch Beladung von Filtern mit Abgaspartikeln und anschließender chemischer Analyse.

Bei der Rauchwert-Methode wird durch die Partikelbeladung das optische Reflexionsverhalten des Filters verändert. Für die Abnahme der Reflexion ist hauptsächlich der in den Partikeln vorhandene Kohlenstoff verantwortlich. Die Bestimmung der interessierenden Größe, die Rußkonzentration im Abgas, erfolgt durch Kalibrierung. Ein Nachteil dieser Methode liegt darin, dass die für die Konzentrationsberechnung notwendige Masse nicht direkt bestimmt werden kann.

Die chemische Analyse der Filterbeladung erfolgt durch Extraktion des mit den Partikeln beladenen Filters mit einem organischen Lösungsmittel. Am Filter bieibt die organisch nicht lösliche Fraktion zurück. Durch Bestimmung der Masse des unbeladenen Filters, des beladenen Filters und des extrahierten Filters können die gesamte Partikelmasse und die Anteile der löslichen und der nicht löslichen Fraktionen bestimmt werden. Die Nachteile dieser Methode liegen darin, dass die Analysen zeitaufwendig sind und hohe Anforderungen an das Labor stellen.

Durch strengere Abgasnormen müssen die Partikelmassenkonzentrationen im Abgas immer niedriger werden. Bei sehr niedrigen Konzentrationen ergeben sich bei den oben genannten Meßmethoden jedoch sehr lange Messzeiten. Durch das integrale Messprinzip kann die Partikelemission nur über die gesamte Messzeit bestimmt werden, wodurch die zeitliche Auflösung dieser Methoden nieder ist.

Weiters ist es bereits bekannt Aerosolpartikel mittels einer Kristall-Mikrowaage gravimetrisch zu bestimmen. Ein entsprechendes Verfahren bzw. Vorrichtung ist in der US 3,561,253 A beschrieben. Die Vorrichtung weist eine Messzelle mit ausgangsseitig angeschlossener Vakuumpumpe auf, in welche das zu messende Aerosol über eine Düse direkt auf die sensitive Oberfläche eines Schwingquarzes geleitet wird. Die Abscheidung der Partikel aus dem Aerosol erfolgt in den einzelnen Ausführungsvarianten durch Impaktion und/oder durch elektrostatische Abscheidung. Die auf dem Schwingquarz abgeschiedenen Partikel ändern die Resonanzfrequenz des Kristalls, welche Änderung als Maß für die Partikelkonzentration im Trägergas herangezogen wird. Mit diesem Messverfahren wird allerdings nur die Gesamtkonzentration aller Partikel im Trägergas bestimmt, eine Bestimmung des nichtflüchtigen Anteils der Partikel, z.B. im Abgas von Verbrennungsmotoren, ist damit nicht erzielbar.

Zur Erzielung eines möglichst großen Messbereiches mit einer linearen Kennlinie ist aus der DE 100 61 976 A1 eine Vorrichtung zur quantitativen und qualitativen Analyse von Partikeln in Gasen bekannt geworden, bei welcher ein relativ zur Messzelle ortsfester Schwingsensor und eine im Bezug auf die Sensoroberfläche bewegliche Lochblende zur Abscheidung der Partikel verwendet werden.

Eine weitere Anwendung einer Kristall-Mikrowaage zur Bestimmung der Partikelmassenkonzentration in Aerosolen ist in der US 5,892,141 A geoffenbart. Die Partikelbeladung der Mikrowaage erfolgt hier durch elektrostatische Abscheidung. Im Unterschied zur oben zitierten US 3,561,253 A erfolgt die Messung erst nach der Abscheidung der Partikel. Durch anschließendes Erhitzen des Schwingsensors mit Hilfe eines Laserstrahls unter Einleitung einer oxidierenden Atmosphäre in die Messzelle, werden die Partikel pyrolytisch abgetragen und die daraus resultierenden Änderungen der Resonanzfrequenz des Schwingsensors gemessen. Die am Sensor abgeschiedenen Partikel werden zumindest teilweise entfernt, wodurch einzelne Partikelfraktionen z.B. deren flüchtigen Anteile bestimmt werden können. Aufgrund der der Messung vorausgehenden Phase der Partikelabscheidung über eine bestimmte Zeitspanne kommt es zu einem Summationseffekt, sodass eine Messung der Partikelkonzentration mit hoher zeitlicher Auflösung nicht möglich ist. Insbesondere kann keine Online-Bestimmung der Rußkonzentration durchgeführt werden.

Die WO 88/02480 A1 beschreibt eine Vorrichtung zur Analyse von Ablagerungen auf einem Schwingsensor, wobei allerdings erst nach der Ablagerung der zu messenden Substanz verschiedene Temperaturniveaus gefahren werden und anhand einer thermogravimetrischen Analyse die Inhaltsstoffe bestimmt werden. Ein derartiges Verfahren entspricht somit jenem aus der oben zitierten US 5,892,141 A, mit den bereits erwähnten Nachteilen. Insbesondere ist mit einem derartigen Verfahren eine Online-Bestimmung der Rußkonzentration nicht möglich.

In der US 6,181,419 A ist eine neuartige Methode zur Bestimmung des Rußvolumens im Abgas beschrieben. Dabei werden durch einen hochenergetischen Laserpuls die Rußpartikel zum Glühen gebracht und aus der Intensität und dem zeitlichen Verhalten der Lichtabstrahlung der glühenden Partikel die Volumenkonzentration bestimmt.

Weiters ist aus der DD 268 530 A1 ein Verfahren und eine Vorrichtung zur Bestimmung der Konzentration von Quecksilber in Gasen bekannt, bei welcher eine quecksilberspezifisch adsorbierende, metallische Kontaktzone verwendet wird, auf der das Quecksilber in Form von Amalgam gebunden wird. Die metallische Kontaktzone wird dabei von einer akustischen Oberflächenwelle durchlaufen, wobei sich in Abhängigkeit vom Amalgamgehalt die Ausbreitungsgeschwindigkeit der Oberflächenwelle ändert. Die Temperatur des Kristalls kann auf über 100°C erhöht werden und dient dazu, die Wasserdampfkondensation zu unterdrücken. Die Regenerierung der Kontaktzone erfolgt thermisch, wobei die Dauer der Wärmezufuhr aus der Oszillatorfrequenz abgeleitet wird. Aufgrund der spezifisch ausgebildeten Kontaktzone ist das Verfahren ausschließlich auf die flüchtigen Quecksilberanteile des Gases sensitiv. Mit dem bekannten Verfahren können keine anderen flüchtigen Verbindungen und auch keine nichtflüchtigen Anteile von Aerosolpartikeln in einer gasförmigen Probe bestimmt werden.

Das Ziel der vorliegenden Erfindung ist es nun, die Konzentration nichtflüchtiger Anteile von Aerosolpartikeln einer Gasprobe, insbesondere die Rußkonzentration im Abgas von Verbrennungsmotoren gravimetrisch mit einer hohen zeitlichen Auflösung und einer hohen Massenempfindlichkeit zu bestimmen.

Das erfindungsgemäße Ziel wird dadurch erreicht, dass der Schwingsensor zumindest einer Kristall-Mikrowaage während der Abscheidung der Aerosolpartikel auf einer Temperatur über 200 °C, vorzugsweise zwischen 250 °C und 350 °C, gehalten wird. Dabei ist es von besonderem Vorteil, wenn die Gasprobe vor dem Auftreffen auf den Schwingsensor der Kristall-Mikrowaage auf eine Temperatur von über 200 °C, vorzugsweise zwischen 250 °C und 350 °C, thermostatisiert wird. Durch die erhöhten Temperaturen werden die an bzw. in den Aerosolpartikeln adsorbierten flüchtigen Bestandteile abgetrennt und tragen somit nichts zum Messergebnis bei, sodass aus dem Messergebnis direkt auf die Konzentration der nichtflüchtigen Bestandteile (z.B. Rußpartikel im Abgas) geschlossen werden kann.

Dieses Verfahren ist somit besonders zur Messung von Emissionen mit niedriger Massenkonzentration bei gleichzeitig hoher zeitlicher Auflösung geeignet.

Nach dem Erreichen einer kritischen Beladung des Schwingsensors wird dieser zur pyrolytischen Entfernung der abgeschiedenen graphitischen Anteile der Aerosolpartikel auf Temperaturen über 500 °C, vorzugsweise über 600 °C, gebracht. Durch die an die Messphase anschließende Aufheizphase auf die Verbrennungstemperatur des Rußes erfolgt eine einfache und rasche Reinigung des Sensorelements, das danach für weitere Messungen zur Verfügung steht.

Erfindungsgemäß ist vorgesehen, dass die Änderung der Resonanzfrequenz des Schwingsensors während der pyrolytischen Entfernung der graphitischen Anteile gemessen und dadurch der Abbrennvorgang kontrolliert wird. Dabei kann dem Schwingsensor bzw. der Messzelle vor oder während der pyrolytischen Entfernung der graphitischen Anteile eine oxidierende Atmosphäre, beispielsweise Reinluft, zugeführt werden.

Erfindungsgemäß kann das Messverfahren auch mehrere Kristall-Mikrowaagen verwenden, deren jeweilige Schwingsensoren auf unterschiedlichen Temperaturen gehalten werden. Insbesondere ist vorgesehen, dass zur getrennten Erfassung der Anteile der nicht flüchtigen, graphitischen Partikel und der mineralischen Partikel die Temperatur des Schwingsensors einer ersten Kristall-Mikrowaage bei über 200 °C, vorzugsweise zwischen 250 °C und 350 °C, und die Temperatur des Schwingsensors einer zweiten Kristall-Mikrowaage bei über 500 °C gehalten wird. Zur Erfassung der Gesamtpartikel kann weiters die Temperatur des Schwingsensors einer dritten Kristall-Mikrowaage auf niedriger Temperatur gehalten werden.

Besonders genaue Messergebnisse werden erzielt, wenn zur Bestimmung der Messgröße mindestens zwei Schwingungsparameter des Schwingsensors, vorzugsweise die Resonanzfrequenz und die Dämpfung, herangezogen werden und damit die durch die viskoelastischen Eigenschaften der abgeschiedenen Partikelschicht hervorgerufene, nicht massenproportionale Änderung der Resonanzfrequenz kompensiert wird.

Die Probenahme kann durch übliche Methoden erfolgen, die Verdünnungsrate muss so gewählt werden, dass die gewünschte Messdauer erreicht werden kann, um die zulässige Massenbeladung der Kristall-Mikrowaage nicht zu überschreiten.

Eine Vorrichtung zur Bestimmung des nichtflüchtigen Anteils von Aerosolpartikeln in einer Gasprobe, insbesondere im Abgas von Verbrennungsmotoren, mit zumindest einer Messzelle mit einer Gaszutrittsöffnung, wobei in der Messzelle ein von der Gasprobe beaufschlagter Schwingsensor einer Kristall-Mikrowaage angeordnet ist, zeichnet sich erfindungsgemäß dadurch aus, dass dem Schwingsensor eine Thermostatisiereinrichtung zur Aufrechterhaltung einer Temperatur von über 200 °C, vorzugsweise zwischen 250 °C und 350 °C, zugeordnet ist.

Gemäß einem weiteren Merkmal der Erfindung, weist die Thermostatisiereinrichtung eine der Messzelle vorgeschaltete Heizkammer mit einer Blende für den Gasübertritt in die Messzelle auf.

Die Erfindung wird im Folgenden anhand von schematisch dargestellten Ausführungsbeispielen näher erläutert. Dabei zeigt
- Fig. 1: eine erfindungsgemäße Vorrichtung zur Bestimmung des nichtflüchtigen Anteils von Aerosolpartikeln in einer Gasprobe und
- Fig. 2: eine Ausführungsvariante nach Fig. 1 mit mehreren unterschiedlich thermostatisierten Messzellen.

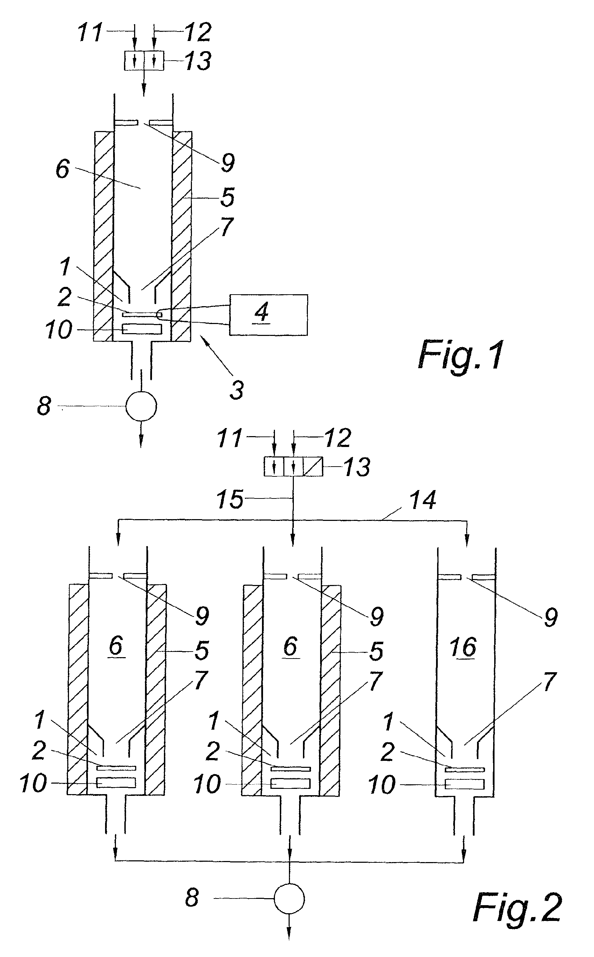

Die Vorrichtung gemäß Fig. 1 weist eine Messzelle 1 mit einem darin angeordneten Schwingsensor 2 einer allgemein mit 3 bezeichneten Kristall-Mikrowaage auf. Der Oszillatorkreis sowie die Schaltungsanordnung zur Steuerung des Oszillatorkreises, der Messdatenerfassung, -speicherung, und -anzeige der Kristall-Mikrowaage ist mit 4 bezeichnet. Dem Schwingsensor 2 ist eine Thermostatisiereinrichtung 5 in Form einer Ummantelung der Messzelle 1 und einer der Messzelle 1 vorgeschalteten Heizkammer 6 zugeordnet, mit welcher Temperaturen von über 200 °C, vorzugsweise zwischen 250 °C und 350 °C in der Messzelle erreicht werden können. Die Partikel werden mit einer ausgangsseitig der Heizkammer 6 angeordneten Blende 7 auf die sensitive Oberfläche des Schwingsensors 2 abgeschieden.

Die Abscheidung der Partikel erfolgt im dargestellten Beispiel durch Impaktion, wäre aber auch mit elektrostatischer Abscheidung möglich. Um auch kleine Partikel (bis 10 oder 20nm) am Schwingsensor 2 abscheiden zu können, wird die Niederdruck-Impaktion angewendet. Dazu steht die Messzelle 1 ausgangsseitig mit einer Vakuumpumpe 8 in Verbindung, wobei die Heizkammer 6 zur Erzeugung eines Unterdruckes in der Messzelle 1 mit einer als kritische Düse ausgebildeten Lochblende 9 für den Gaseintritt ausgestattet ist. Die kritische Düse stabilisiert ab einem bestimmten Druckabfall an der Düse den Durchfluss und erzeugt, abhängig vom Saugvermögen der Vakuumpumpe 8, einen bestimmten Unterdruck von ca. 20 bis 500 mbar in der Messzelle 1. Die Blende 7, mit einer oder mehreren Düsenöffnungen ausgestattet, ermöglicht eine gezielte Abscheidung auf dem sensitiven Bereich des Schwingsensors. Durch die Anordnung, Zahl und Größe der Düsenöffnungen in der Blende 7, deren Anordnung bezüglich dem Schwingsensor 2 und dem Druck in der Messzelle 1 ist der cut-off-Durchmesser der Anordnung bestimmt. Der cut-off-Durchmesser gibt an, dass Partikel mit diesem Durchmesser mit einer Wahrscheinlichkeit von 50 % abgeschieden werden. Kleinere bzw. größere Partikel werden mit einer niedrigeren bzw. höheren Wahrscheinlichkeit abgeschieden.

Das Abtrennen der leicht flüchtigen Fraktion im Aerosol erfolgt zwischen der Lochblende 9 (kritische Düse) und dem Schwingsensor 2. Damit die leicht flüchtige Fraktion abgetrennt wird, muss das Abgas auf eine Temperatur von mindestens 200 °C, besser auf eine Temperatur im Bereich von 300 °C, gebracht werden. Dies erfolgt durch Thermostatisieren der Heizkammer 6 und der anschließenden Messzelle 1 zwischen kritischer Düse und Blende 7 auf die gewünschte Temperatur.

Die Bestimmung der Temperatur des Schwingsensors 2 kann - außerhalb der Phase der Partikelbeladung - indirekt über das Temperaturverhalten der Eigenfrequenz erfolgen. Als Sensorelement wird vorzugsweise ein piezoelektrischer BAW-Resonator aus einem temperaturbeständigen Material verwendet, dessen Dickenschermode angeregt wird. Vorzugsweise werden solche Resonatoren verwendet, welche bei der gewünschten Betriebstemperatur eine Temperaturkompensation zeigen. Im allgemeinen tritt eine parabolische Abhängigkeit der Eigenfrequenz von der Temperatur auf, dadurch besitzt die Eigenfrequenz bei der Umkehrtemperatur ein Maximum. Die Temperaturregelung kann nun so erfolgen, dass das Maximum der Eigenfrequenz erreicht wird, womit die Temperatur der Anordnung bestimmt ist. Ein weiterer Vorteil dieser Temperaturkompensation liegt darin, dass Temperaturschwankungen im Abgas nur zu sehr geringen Änderungen im Messsignal führen und die Genauigkeit dadurch gesteigert werden kann.

Zur Entfernung der Beladung ist dem Schwingsensor 2 ein Widerstands- oder Strahlungsheizelement 10 zur Erzielung von Temperaturen über 500 °C, vorzugsweise über 600 °C, zugeordnet. Durch Aufheizen der Beladung auf ca. 600 °C durch das Heizelement 10, das unmittelbar in der Nähe des Resonators bzw. der Beladung in der Messzelle 1 angebracht ist, können die graphitischen Anteile, d.h. die Rußpartikel, von der Sensoroberfläche entfernt werden.

Aufgrund der hohen Verbrennungstemperatur, ist es von Vorteil, als Material für die Schwingsensoren Kristalle zu verwenden, die bis zu Temperaturen von über 600 °C thermisch stabil sind, wie z.B. GaPO₄ oder Kristalle der Langasit-Struktur Familie (vorzugsweise LGS (La₃Ga₅SiO₁₄), LNG (Ln₃Nb_{0.5}Ga_{5.5}O₁₄) und LTG (Ln₃Ta_{0.5}Ga_{5.5}O₁₄) mit Ln = La, Pr, Nd sowie SGG (Sr₃Ga₂Ge₄O₁₄) und CGG (Ca₃Ga₂Ge₄O₁₄)).

Der piezoelektrische Resonator des Schwingsensors 2 wird mittels einer Oszillator-Elektronik 4 zu Schwingungen mit der Eigenfrequenz angeregt. Ausgangssignale des Oszillators sind die Resonanzfrequenz des BAW-Resonators und ein der Dämpfung des Resonators proportionales Signal. Weitere für die Schwingung relevante Größen sind, je nach Oszillator-Konzept, die Spannung am Resonator, der Strom durch den Resonator, die Leistung am Resonator und die Phase. Die Resonanzfrequenz, deren Änderung bei geringer Massenbeladung proportional der Masse ist, wird zur Bestimmung der Partikelmassenkonzentration verwendet, die sich aus der Empfindlichkeit des Sensorelements bezüglich Massenbeladung, der zeitlichen Änderung der Resonanzfrequenz und dem bekannten Durchfluss ergibt.

Das Dämpfungssignal kann zur Beurteilung der akustischen Eigenschaften der abgeschiedenen Partikelschicht verwendet werden. Bei nicht glasartigen Schichten führen die viskoelastischen Eigenschaften dieser Schicht zu einer nicht massenproportionalen Abnahme der Resonanzfrequenz. Durch Berücksichtigung des Dämpfungssignals bei der Signalauswertung besteht nun die Möglichkeit, die Abweichung von der tatsächlich vorhandenen Masse zu kompensieren und/oder den Messbereich durch eine maximal zulässige Dämpfung festzulegen.

### Ablauf einer Messung:

Die Vorrichtung wird auf Betriebstemperatur gebracht, während dessen wird Reinluft (Pfeil 11) durch die Messzelle 1 gesaugt.

Zum Beladen mit Aerosolpartikeln wird mit einem Ventil 13 auf Abgas (Pfeil 12) umgeschaltet, durch Zurückschalten auf Reinluft wird die Beladung beendet. Diese Umschaltprozedur, Reinluft -> Abgas -> Reinluft, kann bis zur maximalen Beladung mehrfach wiederholt werden.

Zum Entfernen der Beladung wird die Gasströmung durch die Vorrichtung unterbrochen und das Heizelement 10 aktiviert. Der anschließende Abbrennvorgang kann über die Änderung der Resonanzfrequenz kontrolliert werden und ist abgeschlossen, wenn die Resonanzfrequenz stabil bleibt. Danach wird das Heizelement 10 deaktiviert, Reinluft wird durch die Messzelle 1 gesaugt, die Resonanzfrequenz erreicht wieder den Wert vor der Beladung und es kann eine weitere Messung durchgeführt werden.

Ist die Resonanzfrequenz nach dem Abbrennvorgang niedriger als vor der Beladung, sind am Schwingsensor 2 Rückstände (z.B. mineralische Anteile der Aerosolpartikel, Staub, etc.) vorhanden, die erst bei sehr hohen Temperaturen oder nicht verbrennen. Üblicherweise ist der Rückstand gering und beeinträchtigt die Funktion kaum. Bei zu hohen Rückständen muss der Schwingsensor 2 manuell gereinigt werden.

In der Ausführungsvariante nach Fig. 2 sind mehrere parallelgeschaltete Messzellen 1 vorgesehen, deren Thermostatisiereinrichtungen 5 die einzelnen Schwingsensoren 2 mit unterschiedlichen Temperaturen beaufschlagen. Die Messzellen 1 sind ausgangsseitig an eine Vakuumpumpe 8 angeschlossen und weisen eingangsseitig ein Verteilersystem 14 zur Zufuhr der Gasprobe (Pfeil 12) bzw. von Frischluft (Pfeil 11) auf. Die Umschaltung erfolgt mit dem Ventil 13. Eine Lochblende 9 kann in der zentralen Zuleitung 15 oder eingangs jeder Heizkammer 6 angeordnet sein. Bei der Messkammer zur Erfassung der Gesamtpartikel, welche nur auf einer niedrigen Temperatur gehalten wird, kann die Thermostatisiereinrichtung entfallen und anstelle der Heizkammer ein rohrförmiger Impaktor 16 mit einer eingangsseitigen Lochblende 9 vorgesehen sein. Die beiden anderen Messzellen werden auf Temperaturen von über 200 °C bzw. über 500 °C gehalten.

## Patentansprüche

1. Verfahren zur Bestimmung des nichtflüchtigen Anteils von Aerosolpartikeln in einer Gasprobe, insbesondere im Abgas von Verbrennungsmotoren, wobei die Aerosolpartikel auf einem Schwingsensor zumindest einer Kristall-Mikrowaage abgeschieden werden und die Veränderung zumindest eines Schwingungsparameters des Schwingsensors als Messgröße herangezogen wird, **dadurch gekennzeichnet, dass** der Schwingsensor zumindest einer Kristall-Mikrowaage während der Abscheidung der Aerosolpartikel auf einer Temperatur über 200 °C, vorzugsweise zwischen 250 °C und 350 °C, gehalten wird.

2. Verfahren nach Anspruch 1, **dadurch gekennzeichnet, dass** die Gasprobe vor dem Auftreffen auf den Schwingsensor der Kristall-Mikrowaage auf eine Temperatur von über 200 °C, vorzugsweise zwischen 250 °C und 350 °C, thermostatisiert wird.

3. Verfahren nach Anspruch 1 oder 2, **dadurch gekennzeichnet, dass** der Schwingsensor zur pyrolytischen Entfernung der abgeschiedenen graphitischen Anteile der Aerosolpartikel auf Temperaturen über 500 °C, vorzugsweise über 600 °C, gebracht wird.

4. Verfahren nach Anspruch 3, **dadurch gekennzeichnet, dass** die Änderung der Resonanzfrequenz des Schwingsensors während der pyrolytischen Entfernung der graphitischen Anteile gemessen und dadurch der Abbrennvorgang kontrolliert wird.

5. Verfahren nach Anspruch 3 oder 4, **dadurch gekennzeichnet, dass** dem Schwingsensor vor oder während der pyrolytischen Entfernung der graphitischen Anteile eine oxidierende Atmosphäre, beispielsweise Reinluft, zugeführt wird.

6. Verfahren nach einem der Ansprüche 1 bis 5, **dadurch gekennzeichnet, dass** bei Verwendung mehrerer Kristall-Mikrowaagen die jeweiligen Schwingsensoren der einzelnen Mikrowaagen auf unterschiedlichen Temperaturen gehalten werden.

7. Verfahren nach Anspruch 6, **dadurch gekennzeichnet, dass** zur getrennten Erfassung der Anteile der nicht flüchtigen, graphitischen Partikel und der mineralischen Partikel die Temperatur des Schwingsensors einer ersten Kristall-Mikrowaage bei über 200 °C, vorzugsweise zwischen 250 °C und 350 °C, und die Temperatur des Schwingsensors einer zweiten Kristall-Mikrowaage bei über 500 °C gehalten wird.

8. Verfahren nach Anspruch 7, **dadurch gekennzeichnet, dass** zur Erfassung der Gesamtpartikel die Temperatur des Schwingsensors einer dritten Kristall-Mikrowaage auf niedriger Temperatur gehalten wird.

9. Verfahren nach einem der Ansprüche 1 bis 8, **dadurch gekennzeichnet, dass** die Abscheidung der Aerosolpartikel auf den sensitiven Bereich des Schwingsensors mittels Niederdruck-Impaktion erfolgt.

10. Verfahren nach einem der Ansprüche 1 bis 9, **dadurch gekennzeichnet, dass** zur Bestimmung der Messgröße mindestens zwei Schwingungsparameter des Schwingsensors, vorzugsweise die Resonanzfrequenz und die Dämpfung, herangezogen werden und damit die durch die viskoelastischen Eigenschaften der abgeschiedenen Partikelschicht hervorgerufene, nicht massenproportionale Änderung der Resonanzfrequenz kompensiert wird.

11. Vorrichtung zur Bestimmung des nichtflüchtigen Anteils von Aerosolpartikeln in einer Gasprobe, insbesondere im Abgas von Verbrennungsmotoren, mit zumindest einer Messzelle (1) mit einer Gaszutrittsöffnung, wobei in der Messzelle (1) ein von der Gasprobe beaufschlagter Schwingsensor (2) einer Kristall-Mikrowaage (3) angeordnet ist, **dadurch gekennzeichnet, dass** dem Schwingsensor (2) eine Thermostatisiereinrichtung (5) zur Aufrechterhaltung einer Temperatur von über 200 °C, vorzugsweise zwischen 250 °C und 350 °C, zugeordnet ist.

12. Vorrichtung nach Anspruch 11, **dadurch gekennzeichnet, dass** die Thermostatisiereinrichtung (5) eine der Messzelle (1) vorgeschaltete Heizkammer (6) mit einer Blende (7) für den Gasübertritt in die Messzelle (1) aufweist.

13. Vorrichtung nach Anspruch 12, **dadurch gekennzeichnet, dass** die Messzelle (1) ausgangsseitig mit einer Vakuumpumpe (8) in Verbindung steht und die Heizkammer (6) zur Erzeugung eines Unterdruckes in der Messzelle (1) mit einer Lochblende (9) für den Gaseintritt ausgestattet ist.

14. Vorrichtung nach einem der Ansprüche 11 bis 13, **dadurch gekennzeichnet, dass** dem Schwingsensor (2) ein Widerstands- oder Strahlungsheizelement (10) zur Erzielung von Temperaturen über 500 °C, vorzugsweise über 600 °C, zugeordnet ist.

15. Vorrichtung nach einem der Ansprüche 11 bis 14, **dadurch gekennzeichnet, dass** der Schwingsensor (2) einen piezoelektrischen BAW-Resonator aufweist, welcher aus einem temperaturbeständigen Material, vorzugsweise aus GaPO₄, La₃Ga₅SiO₁₄, Ln₃Nb_{0.5}Ga_{5.5}O₁₄ oder Ln₃Ta_{0.5}Ga_{5.5}O₁₄ mit Ln = La, Pr, Nd sowie Sr₃Ga₂Ge₄O₁₄ oder Ca₃Ga₂Ge₄O₁₄ besteht.

16. Vorrichtung nach einem der Ansprüche 12 bis 15, **dadurch gekennzeichnet, dass** mehrere parallelgeschaltete Messzellen (1) vorgesehen sind, deren Thermostatisiereinrichtungen (5) die einzelnen Schwingsensoren (2) mit unterschiedlichen Temperaturen beaufschlagen.
